# NEUE EUROPÄISCHE PATENTSCHRIFT

(11) **EP 1 961 283 B2**
(45) Veröffentlichungstag und Bekanntmachung des Hinweises auf die Entscheidung über den Einspruch: **04.01.2017**
(45) Hinweis auf die Patenterteilung: 14.09.2011
(21) Anmeldenummer: 07113238.5
(22) Anmeldetag: 26.07.2007
(51) Int. Cl.: A01B 39/22, A01B 63/00, A01B 63/24

(54) **Bodenbearbeitungsgerät**
Soil cultivation device
Appareil de traitement des sols

(30) Priorität: 22.02.2007 DE 102007008616
(43) Veröffentlichungstag der Anmeldung: 27.08.2008
(73) Patentinhaber: Treffler, Paul, 86554 Pöttmes-Echsheim (DE)
(72) Erfinder: Treffler, Paul, 86554 Pöttmes-Echsheim (DE)
(74) Vertreter: Charrier Rapp & Liebau

(56) Entgegenhaltungen:
- EP-A- 0 983 715
- DE-A1- 3 900 100
- DE-U1- 20 115 048
- FR-A- 1 524 258
- GB-A- 919 220

## Beschreibung

Die Erfindung betrifft ein Bodenbearbeitungsgerät, insbesondere zur Pflege von Bodenflächen zwischen Kulturpflanzen, nach dem Oberbegriff des Anspruchs 1.

Ein derartiges Bodenbearbeitungsgerät ist aus der DE 201 15 048 bekannt. Dieses weist mehrere an einem Traggestell verschwenkbar angeordnete Striegelzinken auf, die durch jeweils eine Feder vorgespannt sind. Die Federn sind einerseits mit den jeweiligen Striegelzinken und andererseits über ein Zugseil mit einem am Tragrahmen angeordneten Stellelement verbunden. An dem Stellelement sind fünf unterschiedliche Befestigungsmöglichkeiten für die mit den Federn verbundenen Zugseile vorgesehen, so dass durch Veränderung der Stellung der Befestigungspunkte der Zugseile am Stellrad die Vorspannung der Federn und damit die Vorspannung der Striegelzinken zentral eingestellt werden kann. Ein Nachteil dieser Bodenbearbeitungsgeräts mit manueller Verstellung der Vorspannung besteht jedoch darin, dass die Bearbeitung zur Verstellung unterbrochen werden muss. Da sich die Bodenbeschaffenheit jedoch während der Bodenbearbeitung ständig ändern kann und der Bearbeitungsvorgang vor jeder Verstellung gestoppt werden muss, ist eine Änderung der Vorspannung der Striegelzinken mit einem erheblichen Zeitaufwand verbunden.

Aufgabe der Erfindung ist es, ein Bodenbearbeitungsgerät der eingangs genannten Art zu schaffen, das eine schnelle und einfache Veränderung der Vorspannung der Striegelzinken auch während der Bodenbearbeitung ermöglicht.

Diese Aufgabe wird durch ein Bodenbearbeitungsgerät mit den Merkmalen des Anspruchs 1 gelöst. Zweckmäßige Weiterbildungen und vorteilhafte Ausführungsformen der Erfindung sind Gegenstand der Unteransprüche.

Bei dem erfindungsgemäßen Bodenbearbeitungsgerät ist der Verstelleinrichtung ein mittels eines Steuergeräts ansteuerbarer hydraulischer Stellantrieb zugeordnet. Die zentrale Veränderung der Vorspannung der Striegelzinken bzw. die Einstellung des Zinkendruckes kann somit z.B. vom Schleppfahrzeug aus auch während der Bearbeitung erfolgen. Der Zinkendruck kann bei Bedarf einfach und schnell an die jeweiligen Bodenverhältnisse angepasst werden, wobei hierzu der Bearbeitungsvorgang nicht unterbrochen werden muss. Über eine Wahltaste kann der Landwirt z.B. an dem elektronischen Steuergerät den gewünschten Zinkendruck vorgeben, der dann auch über eine entsprechende Anzeigeeinrichtung angezeigt und überwacht werden kann. Zudem ist erfindungsgemäß vorgesehen, dass der hydraulische Stellantrieb einen am Traggestell angeordneten Hydraulikzylinder umfasst, dessen Kolbenstange durch mindestens ein über Umlenkrollen geführtes Seil mit mindestens einem Stellrad zur Drehung der mindestens einen Verstellwelle gekoppelt ist

Ein nicht von der Erfindung umfasster elektrischer Stellantrieb kann zweckmäßigerweise einen an dem Traggestell angeordneten Getriebemotor umfassen, der z.B. über einen Riemen- oder Kettenantrieb mit mindestens einem Stellrad zur Drehung mindestens einer mit den Federn über Zugseile verbundenen Antriebswelle gekoppelt ist.

Der bezüglich der Energieversorgung besonders vorteilhafte und daher für den Antrieb auch großer Bodenbearbeitungsgeräte mit vielen Striegelzinken bestens geeignete hydraulischer Antrieb umfasst einen am Traggestell angeordneten Hydraulikzylinder, der über eine Zugmittelanordnung mit mindestens einem Stellrad zur Drehung mindestens einer mit den Federn über Zugseile verbundenen Antriebswelle gekoppelt ist.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: ein nicht von der Erfindung umfasstes Bodenbearbeitungsgerät mit elektrischer Zinkendruckverstellung in einer Seitenansicht;
- **Figur 2**: einen Teil eines Bodenbearbeitungsgeräts mit hydraulischer Zinkendruckverstellung in einer Seitenansicht;
- **Figur 3**: ein Bodenbearbeitungsgerät mit hydraulischer Zinkendruckverstellung in einer Draufsicht und
- **Figur 4**: eine vergrößerte Teilansicht von Figur 3.

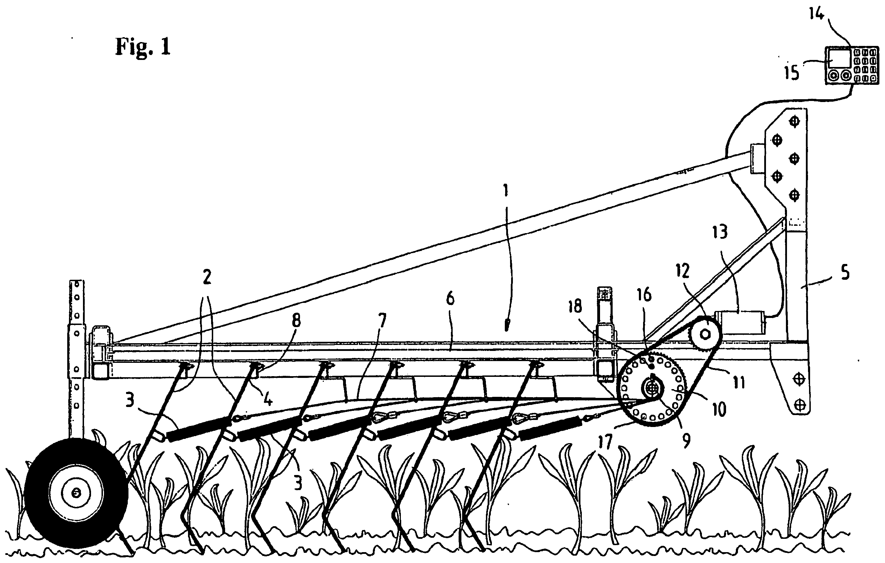

Bei dem in Figur 1 in einer Seitenansicht dargestellten und von der Erfindung nicht umfassten Bodenbearbeitungsgerät handelt es sich um einen so genannten Zinkenstriegel, der im landwirtschaftlichen Ackerbau für die Boden- und Saatbearbeitung von Kulturpflanzungen, insbesondere zur Unkrautbekämpfung im ökologischen Pflanzenbau, eingesetzt wird. Er enthält mehrere an einem Traggestell 1 verschwenkbar angeordnete Striegelzinken 2, die durch jeweils eine Feder 3 gegen einen Anschlag 4 vorgespannt sind. Das Traggestell 1 weist an seinem in Figur 1 rechten Ende einen Dreipunktbock 5 auf, über den das Traggestell 1 an einem Schleppfahrzeug befestigt werden kann. Das Traggestell 1 enthält mehrere voneinander beabstandete Längsträger 6 und Querstreben 8, an denen die an der Unterseite in Fahrtrichtung abgewinkelten Striegelzinken 2 in Längs- und Querrichtung voneinander beabstandet angelenkt sind.

Zur Vorspannung der Striegelzinken 2 ist das eine Ende der Federn 3 an der Striegelzinke 2 unterhalb ihrer Anlenkung befestigt, während das andere Ende der Federn 3 über je ein Zugseil 7 mit einer am Tragrahmen 1 drehbar angeordneten Verstellwelle 9 verbunden ist. Durch Drehung der Verstellwelle 9 kann so eine zentrale Verstellung des Zinkendrucks der Striegelzinken 2 erreicht werden. Bei der in Figur 1 gezeigten nicht von der Erfindung umfassten Ausführung erfolgt die Drehung der Verstellwelle 9 über ein Stellrad 10, das über einen Antriebsriemen oder eine Antriebskette 11 mit einem Antriebsrad 12 eines Getriebemotors 13 verbunden ist. Die Ansteuerung des Getriebemotors 13 erfolgt über ein im Schleppfahrzeug angebrachtes Steuergerät 14, das mit einem Monitor oder einer anderen elektronischen Anzeigeeinrichtung 15 versehen ist. An dem Traggestell 1 ist ein Initiator bzw. Sensor 16 angeordnet, durch den die Winkelstellung des Stellrades 10 anhand mehrerer am Antriebsrad über dessen Umfang gleichmäßig verteilter Bohrungen 17 und einem Referenz-Nullpunkt 18 erfasst werden kann. Dadurch kann die gewählte Vorspannung bestimmt und an der elektronischen Anzeigeeinrichtung 15 des Steuergeräts 14 angezeigt werden.

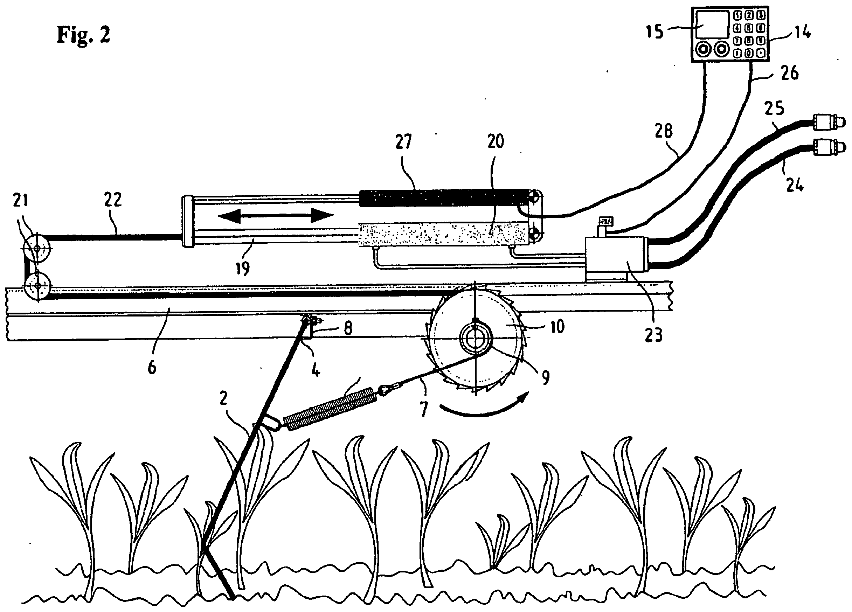

In Figur 2 ist ein Teil eines weiteren Zinkenstriegels mit einem hydraulischen Stellantrieb schematisch dargestellt. Auch hier werden die an den Querstreben 8 angelenkten Striegelzinken 2 durch eine Feder 3 gegen einen Anschlag 4 vorgespannt. Das eine Ende der Feder 3 ist ebenfalls an dem Striegelzinken 2 festgelegt, während das andere Ende der Feder 3 über ein Zugseil 7 mit einer am Tragrahmen 1 drehbar gelagerten Verstellwelle 9 verbunden ist. Zur Drehung der Verstellwelle 9 ist ebenso ein Stellrad 10 vorgesehen, das hier jedoch über eine als Seilzug ausgeführte Zugmittelanordnung mit dem Kolben 19 eines Hydraulikzylinders 20 gekoppelt ist. Die Zugmittelanordnung enthält ein über Umlenkrollen 21 geführtes Seil 22, dessen eines Ende mit dem Kolben 19 des Hydraulikzylinders 20 und dessen anderes Ende mit dem Stellrad 10 verbunden ist. Durch Verschiebung des Kolbens 19 kann so das Stellrad 10 gedreht und damit die Vorspannung der Striegelzinken 2 verändert werden.

Die Betätigung des Hydraulikzylinders 20 erfolgt über ein als 2/2-Wegeventil ausgeführtes hydraulisches Steuerventil 23, das am Tragrahmen 1 angeordnet und über eine Versorgungs- bzw. Rücklaufleitung 24 und 25 mit einem Versorgungsaggregat am Schleppfahrzeug verbindbar ist. Durch eine Verbindungsleitung 26 zum Steuergerät 14 ist das Steuerventil 23 vom Schleppfahrzeug aus ansteuerbar. An dem Hydraulikzylinder 20 ist ferner ein Linearmesssystem 27 angebracht, das über eine Leitung 28 mit dem Steuergerät 14 verbunden ist. Mit Hilfe des Linearmesssystems 27 kann die Verschiebung des Kolbens 19 und damit die Verstellung der Vorspannung der Striegelzinken 2 erfasst und über die Leitung 28 an der elektronischen Anzeigeeinrichtung 15 des Steuergeräts 14 angezeigt werden.

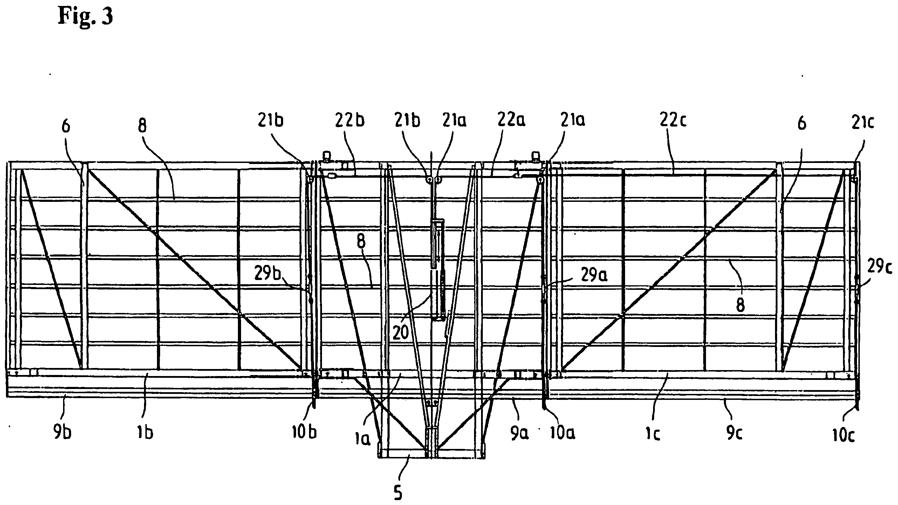

Figur 3 zeigt in einer Draufsicht einen dreiteiligen Zinkenstriegel, der mit einem vorstehend beschriebenen hydraulischen Stellantrieb ausgestattet ist. Das Traggestell 1 dieses Zinkenstriegels besteht aus drei zusammengesetzten gitterartigen Teilen 1a, 1b und 1c, von denen der mittlere Teil 1a den zur Befestigung an dem Schleppfahrzeug vorgesehenen Dreipunktblock 5 enthält. Die beiden äußeren Teile 1b und 1c der Traggestells 1 sind nach oben umklappbar am mittleren Teil 1a angebracht. Die unterschiedlichen Teile 1a, 1b und 1c weisen auch drei voneinander getrennte Verstellwellen 9a, 9b und 9c mit separaten Stellrädern 10a, 10b und 10c auf. Die Stellräder 10a, 10b und 10c sind jeweils an den in Figur 3 rechten Enden der Verstellwellen 9a, 9b und 9c befestigt. An den Querstreben 8 der einzelnen Teile 1a, 1b und 1c des Tragrahmens 1 sind die hier nicht gezeigten Striegelzinken um jeweils 28 mm zueinander seitlich versetzt angebracht. Über die in Figur 2 gezeigten Federn 3 und entsprechende Zugseile 7 sind diese mit den Verstellwellen 9a, 9b und 9c zur gleichzeitigen Verstellung verbunden.

Die Kolbenstange 19 des am mittleren Teil 1a des Tragrahmens 1 befestigten Hydraulikzylinders 20 ist durch ein über erste Umlenkrollen 21a geführtes erstes Seil 22a mit dem Stellrad 10a verbunden. Von der Kolbenstange 19 führt außerdem ein zweites Seil 22b über zweite Umlenkrollen 21b zu dem Stellrad 10b. An dem ersten Seil 22a ist zwischen den beiden Umlenkrollen 21a ferner ein drittes Seil 22c befestigt, das über eine dritte Umlenkrolle 21c zu dem dritten Stellrad 10c führt. Über diese Zugmittelanordnung aus mehreren entsprechend umgelenkten Seilen 22a bis 22c können so alle an den unterschiedlichen Teilen 1a, 1b und 1c des Tragrahmens 1 angeordneten Striegelzinken 2 durch den Hydraulikzylinder 20 zentral verstellt werden. In den Seilen 22a, 22b und 22c sind bei der gezeigten Ausführung zusätzliche Spannschlösser 29a, 29b und 29c angeordnet. Durch diese kann bei Bedarf eine Feinjustierung der unterschiedlichen Teile vorgenommen werden.

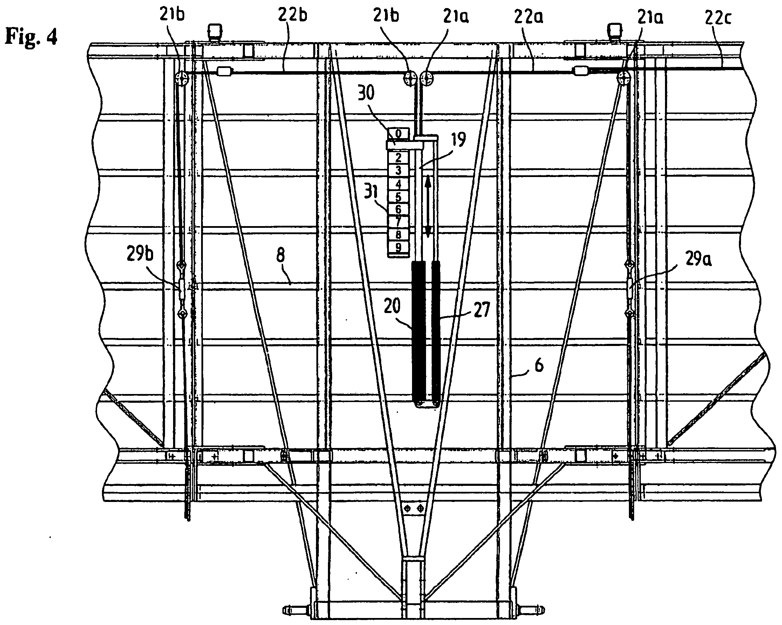

Wie besonders aus Figur 4 hervorgeht, kann an dem Hydraulikzylinder 20 auch eine mechanische Anzeigeeinrichtung zur Anzeige der gewählten Vorspannstellung angebracht sein. Bei der in Figur 4 gezeigten Ausführung befindet sich an der Kolbenstange 19 z.B. ein Zeiger 30, der mit einer am Tragrahmen fest angeordneten Skala 31 zusammenwirkt. Auch über diese mechanische Anzeigeeinrichtung kann die durch den Hydraulikzylinder 20 vorgewählte Vorspannung der Striegelzinken 2 überwacht werden.

Die Erfindung ist nicht auf das vorstehend beschriebene Ausführungsbeispiel beschränkt. So kann z.B. der in Figur 3 dreiteilig ausgeführte Tragrahmen auch einteilig ausgeführt sein oder je nach gewünschter Breite weitere Teile aufweisen. In der Praxis werden z.B. Zinkenstriegel mit einem, drei oder fünf Teilen bei Arbeitsbreiten von 1,7 bis 12,2 Metern angeboten.

## Patentansprüche

1. Bodenbearbeitungsgerät zur Unkrautbekämpfung im ökologischen Pflanzenbau mit einem Traggestell (1), mehreren am Traggestell (1) verschwenkbar angeordneten und an der Unterseite in Fahrtrichtung abgewinkelten Striegelzinken (2) und einer den Striegelzinken (2) zugeordneten Verstelleinrichtung (9, 10), durch welche die Vorspannung der über Federn (3) gegen einen Anschlag (4) vorgespannten Striegelzinken (2) zentral verstellbar ist, wobei die Verstelleinrichtung (9, 10) mindestens eine Verstellwelle (9) umfasst, die mit den Federn (3) über Zugseile (7) verbunden ist, **dadurch gekennzeichnet, dass** der Verstelleinrichtung (9, 10) ein mittels eines Steuergeräts (14) ansteuerbarer hydraulischer Stellantrieb (20, 22) zugeordnet ist und der hydraulische Stellantrieb (19, 20) einen am Traggestell (1) angeordneten Hydraulikzylinder (20) umfasst, dessen Kolbenstange (19) durch mindestens ein über Umlenkrollen (21) geführtes Seil (22) mit mindestens einem Stellrad (9) zur Drehung der mindestens einen Verstellwelle (9) gekoppelt ist.

2. Bodenbearbeitungsgerät nach Anspruch 1, **dadurch gekennzeichnet, dass** an dem Hydraulikzylinder (20) ein Linearmesssystem (20) zur Erfassung der Verschiebung einer Kolbenstange (19) des Hydraulikzylinders (20) angeordnet ist.

3. Bodenbearbeitungsgerät nach Anspruch 1 oder 2, **dadurch gekennzeichnet, dass** das an dem Hydraulikzylinder (20) eine mechanische Anzeigeeinrichtung (30, 31) zur Anzeige der Verschiebung der Kolbenstange (19) des Hydraulikzylinders (20) angebracht ist.

4. Bodenbearbeitungsgerät nach einem der Ansprüche 1 bis 3, **dadurch gekennzeichnet, dass** an dem Tragrahmen (1) ein hydraulisches Steuerventil (23) zur Betätigung des Hydraulikzylinders (20) angeordnet ist.

5. Bodenbearbeitungsgerät nach einem der Ansprüche 1 bis 4, **dadurch gekennzeichnet, dass** die Kolbenstange (19) des Hydraulikzylinders (20) durch mehrere über Umlenkrollen (21a, 21b, 21c) geführte und miteinander verbundene Seile (22a, 22b, 22c) mit mehreren Stellrädern (10a, 10b, 10c) zur Drehung mehrerer mit den Federn (3) über Zugseile (7) verbundener Antriebswellen (9a, 9b, 9c) gekoppelt ist.

6. Bodenbearbeitungsgerät nach Anspruch 5, **dadurch gekennzeichnet, dass** in den Seilen (22a, 22b, 22c) Spannschlösser (29a, 29b, 29c) angeordnet sind.

7. Bodenbearbeitungsgerät nach einem der Ansprüche 1 bis 6, **dadurch gekennzeichnet, dass** der Tragrahmen (1) aus mehreren Teilen (1a, 1b, 1c) zusammengesetzt ist.

## Claims

1. Soil cultivation device for weed control in ecological crop farming having a supporting frame (1), a plurality ofraking tines (2) arrangedpivotably on the supporting frame (1) and angled in the direction of travel on the lower side, and an adjusting device (9, 10) which is associated with the raking tines (2) and by which the preloading of the raking tines (2), which are preloaded towards a stop (4) by springs (3), is centrally adjustable, wherein the adjusting device (9, 10) comprises at least one adjusting shaft (9) which is connected to the springs (3) by traction cables (7), **characterised in that** associated with the adjusting device (9, 10) is a hydraulic actuator (20, 22) which can be controlled by means of a control device (14), and the hydraulic actuator (19, 20) comprises a hydraulic cylinder (20) which is mounted on the supporting frame (1) and of which the piston rod (19) is coupled by at least one cable (22) guided over deflection rollers (21) to at least one adjusting wheel (9) for turning the at least one adjusting shaft (9).

2. Soil cultivating device according to claim 1, **characterised in that** a linear measuring system (20) is arranged on the hydraulic cylinder (20) to detect the displacement of a piston rod (19) of the hydraulic cylinder (20).

3. Soil cultivating device according to claim 1 or 2, **characterised in that** a mechanical indicating device (30,31) is arranged on the hydraulic cylinder (20) to indicate the displacement of the piston rod (19) of the hydraulic cylinder (20).

4. Soil cultivating device according to one of claims 1 to 3, **characterised in that** a hydraulic control valve (23) is arranged on the supporting frame (1) to actuate the hydraulic cylinder (20).

5. Soil cultivating device according to one of claims 1 to 4, **characterised in that** the piston rod (19) of the hydraulic cylinder (20) is coupled to a plurality of adjusting wheels (10a, 10b, 10c) for rotating a plurality of driving shafts (9a, 9b, 9c) connected to the springs (3) by means of traction cables (7) through a plurality of cables (22a, 22b, 22c) which are guided over deflection rollers (21a, 21b, 21c) and connected to one another.

6. Soil cultivating device according to claim 5, **characterised in that** turnbuckles (29a, 29b, 29c) are arranged in the cables (22a, 22b, 22c).

7. Soil cultivating device according to one of claims 1 to 6, **characterised in that** the supporting frame (1) is composed of a plurality of parts (1a, 1b, 1c).

## Revendications

1. Appareil de traitement des sols pour la lutte contre les mauvaises herbes dans la culture écologique des plantes avec un châssis porteur (1), plusieurs dents de herse étrille (2) disposées de manière pivotante au niveau du châssis porteur (1) et coudées dans le sens de déplacement au niveau de la face inférieure et un dispositif de réglage (9, 10) affecté aux dents de herse étrille (2), par lequel la précontrainte des dents de herse étrille (2) précontraintes contre une butée (4) par le biais de ressorts (3) est réglable centralement, dans lequel le dispositif de réglage (9, 10) comprend au moins un arbre de réglage (9), qui est relié aux ressorts (3) par le biais de câbles de traction (7), **caractérisé en ce qu'**un servomoteur hydraulique (20, 22) pouvant être commandé au moyen d'un appareil de commande (14) est affecté au dispositif de réglage (9, 10) et le servomoteur hydraulique (19, 20) comprend un vérin hydraulique (20) disposé au niveau du châssis porteur (1) dont la tige de piston (19) est couplée par au moins un câble (22) guidé via des poulies de renvoi (21) à au moins une roue de réglage (9) pour la mise en rotation de l'au moins un arbre de réglage (9).

2. Appareil de traitement des sols selon la revendication 1, **caractérisé en ce qu'**un système de mesure linéaire (20) est disposé au niveau du vérin hydraulique (20) pour la détection du déport d'une tige de piston (19) du vérin hydraulique (20).

3. Appareil de traitement des sols selon la revendication 1 ou 2, **caractérisé en ce qu'**un dispositif d'affichage mécanique (30, 31) est monté au niveau du vérin hydraulique (20) pour l'affichage du déport de la tige de piston (19) du vérin hydraulique (20).

4. Appareil de traitement des sols selon l'une quelconque des revendications 1 à 3, **caractérisé en ce qu'**une valve de commande hydraulique (23) est disposée au niveau du châssis porteur (1) pour l'actionnement du vérin hydraulique (20).

5. Appareil de traitement des sols selon l'une quelconque des revendications 1 à 4, **caractérisé en ce que** la tige de piston (19) du vérin hydraulique (20) est couplée par plusieurs câbles (22a, 22b, 22c) reliés les uns aux autres et guidés via des poulies de renvoi (21a, 21b, 21c) à plusieurs roues de réglage (10a, 10b, 10c) pour la mise en rotation de plusieurs arbres d'entraînement (9a, 9b, 9c) reliés aux ressorts (3) par le biais de câbles de traction (7).

6. Appareil de traitement des sols selon la revendication 5, **caractérisé en ce que** des tendeurs (29a, 29b, 29c) sont disposés dans les câbles (22a, 22b, 22c).

7. Appareil de traitement des sols selon l'une quelconque des revendications 1 à 6, **caractérisé en ce que** le châssis porteur (1) est composé de plusieurs parties (1a, 1b, 1c).
